# EUROPEAN PATENT SPECIFICATION

(11) **EP 2 569 581 B1**
(45) Date of publication and mention of the grant of the patent: **13.01.2016**
(21) Application number: 11780274.4
(22) Date of filing: 12.05.2011
(51) Int. Cl.: F24F 13/24, F16L 55/033, F01N 1/24, F16L 55/027, F24F 13/02

(54) **ATTENUATING SECTION FOR SOUND ATTENUATOR IN AIR CONDITIONING DUCT AND SOUND ATTENUATOR FOR AIR CONDITIONING DUCT**
DÄMPFUNGSABSCHNITT FÜR EINEN SCHALLDÄMPFER IN EINER KLIMAANLAGENLEITUNG UND SCHALLDÄMPFER FÜR EINE KLIMAANLAGENLEITUNG
PARTIE D'ATTÉNUATION POUR ATTÉNUATEUR ACOUSTIQUE DE CONDUIT DE CLIMATISEUR ET ATTÉNUATEUR ACOUSTIQUE POUR CONDUIT DE CLIMATISEUR

(30) Priority: 12.05.2010 FI 20105526
(43) Date of publication of application: 20.03.2013
(73) Proprietor: Jeven Oy, 50100 Mikkeli (FI)
(72) Inventor: VARTIAINEN, Seppo, FI-50190 Mikkeli (FI)
(74) Representative: Berggren Oy Ab
(86) International application number: PCT/FI2011/050437
(87) International publication number: WO 2011/141639

(56) References cited:
- EP-A1- 0 487 481
- EP-A1- 0 487 481
- EP-A1- 0 495 763
- EP-A1- 0 495 763
- DE-A1- 2 620 169
- DE-A1- 2 620 169
- US-A1- 2008 160 904
- US-B1- 6 644 061

## Description

The invention relates to an attenuating section for a sound attenuator for an air conditioning duct according to the preamble of claim 1.

The invention also relates to a sound attenuator for an air conditioning duct according to the preamble of claim 9.

From prior art are known various sound attenuators which are to be fitted in an air conditioning duct and which are intended for attenuating sounds, particularly noise, in air conditioning ducts. Such a sound attenuator usually comprises one or more elongated air ducts or openings going through the sound attenuator, a housing implemented of sheet metal or equivalent and an attenuating section including foam plastic, mineral wool or equivalent sound-attenuating material which is arranged as a uniform layer between the air duct and the housing. We refer e.g. to US patent specification US4236597, German patent application specification DE2620169 and international patent application specification WO87/03948.

A problem of the above sound attenuators is especially their installation in the air conditioning duct. At a desired point in the air conditioning duct must be arranged a special fitting section, such as an extension section, into connection with which the sound attenuator is installable. Then, pressure loss over the sound attenuator must also be considered, which pressure loss in the above sound attenuators is considerably large. The large pressure loss requires an efficient air-transfer arrangement, such as blowers, and this increases the power consumption of the air conditioning system.

Another problem of the above sound attenuators is their structure and relatively large manufacturing costs incurred by it.

In addition, other solutions for sound attenuators are known from patent applications EP0495763A1 and EP0487481A1.

The object of the invention is to eliminate problems related to the above described sound attenuators and their installation in air conditioning ducts. Another object of the invention is to provide a novel improved attenuating section for a sound attenuator for an air conditioning duct.

The attenuating section for the sound attenuator in the air conditioning duct according to the invention is characterised by what is presented in claim 1.

The sound attenuator for the air conditioning duct according to the invention is characterised by what is presented in claim 9.

The dependent claims present some advantageous embodiments of the invention.

The invention relates to an attenuating section for a sound attenuator for an air conditioning duct which attenuating section is implemented of elastic and sound-attenuating material. According to the invention, the attenuating section comprises at least one attenuation element which is provided with a permanent magnet arrangement by means of which the attenuating section is to be detachably fastened to the housing section of the sound attenuator.

It is particularly advantageous that the housing section of the sound attenuator is arranged as a part of the air conditioning duct i.e. the duct pipe frame on the inner wall of which one or more attenuation elements are fastenable with the permanent magnet arrangement.

In an advantageous embodiment of the invention, the attenuating section comprises at least one laminar attenuation element on one narrow side of which is arranged a set of permanent magnet fasteners to implement the permanent magnet arrangement. By means of the permanent magnet fasteners, the attenuation element is fastened in its longitudinal direction on the inner wall of the housing section, most advantageously the pipe frame of the air conditioning duct, in the flow direction of air.

In another advantageous embodiment of the invention, the attenuating section comprises at least one cylindrical, advantageously tubular, attenuation element onto the housing of which on at least one straight line in the longitudinal direction of the attenuation element is arranged a set of permanent magnet fasteners to implement the permanent magnet arrangement. By means of these permanent magnet fasteners, the attenuation element is fastened in its longitudinal direction on the inner wall of the housing section, most advantageously the pipe frame of the air conditioning duct, in the flow direction of air.

The invention also relates to a sound attenuator for an air conditioning duct which is to be fitted in the air conditioning duct to attenuate duct sounds which sound attenuator comprises a housing section which is implemented from a part of the air conditioning duct, particularly its pipe frame; and an attenuating section which is of elastic and sound-attenuating material and fitted within the housing section. According to the invention, the attenuating section is implemented according to a patent claim related to the attenuating section and fastened on the inner wall of the housing section and simultaneously the air conditioning duct with a permanent magnet arrangement, particularly with permanent magnet fasteners.

An advantage of the invention is particularly the easy installability and serviceability of the sound attenuator.

An advantage of the invention is the simple structure and manufacturing-friendliness.

An advantage of the invention is also the efficient sound attenuation in the air conditioning duct.

Next, the invention and its further advantages will be described in more detail with reference to the enclosed drawing in which
- Fig. 1: schematically shows a cross section of a sound attenuator for an air conditioning duct according to the invention which also reveals some attenuating sections for the sound attenuator for the air conditioning duct according to the invention;
- Fig. 2: shows an elongated section of the sound attenuator for the air conditioning duct of Fig. 1 and of some of its attenuation sections;
- Fig. 3A: shows a cross-sectional view of an enlarged detail of an attenuating section according to the invention;
- Fig. 3B: shows a cross-sectional view of an enlarged detail of another attenuating section according to the invention;
- Fig. 4: schematically shows a cross section of a further sound attenuator for an air conditioning duct according to the invention which also reveals some second attenuating sections for the sound attenuator for the air conditioning duct according to the invention; and
- Fig. 5: illustratively shows an additional attenuating section according to the invention which is arranged in the longitudinal direction and in the direction of air flow in an air conditioning duct.

The figures employ the same reference numbers of parts corresponding each other.

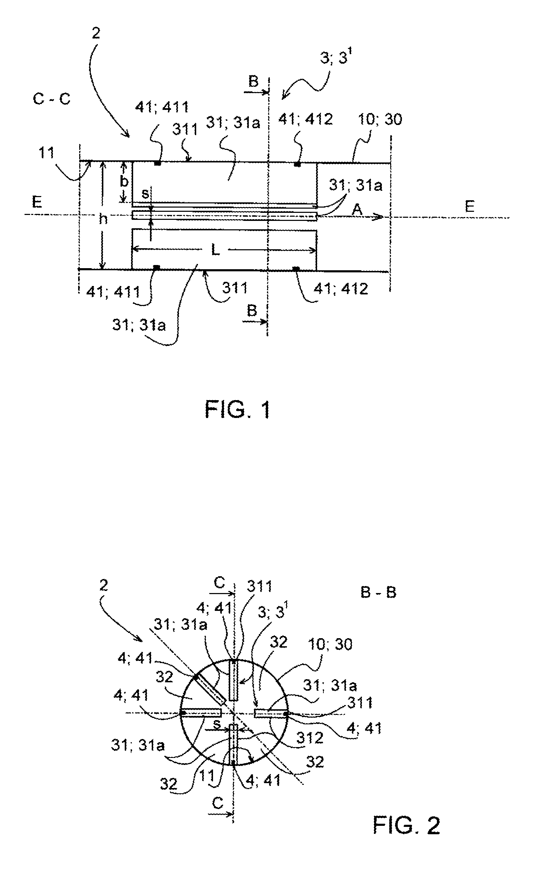

A sound attenuator 2 for an air conditioning duct is in Figs. 1 and 2 fitted in an air conditioning duct 1 and its purpose is to attenuate noise and other disturbing sounds being carried along the duct. The sound attenuator 2 comprises a housing section 30 and an attenuating section 3. The housing section 30 is most advantageously implemented from a part of the air conditioning duct, particularly its pipe frame 10. The attenuating section 3 is implemented of elastic and sound-attenuating material and fitted within the housing section 10, 30.

The attenuating section 3 of the sound attenuator 2 comprises at least one attenuation element 31 which is provided with a permanent magnet arrangement 4; 41 by means of which the attenuating section is to be detachably fastened to the housing section 10, 30 of the sound attenuator, particularly on its inner wall 11. Then, the housing section 10, 30 is implemented of ferromagnetic material, such as galvanised sheet metal. It should be noticed that air conditioning ducts are mainly implemented particularly of material of said type.

In a first advantageous embodiment of the invention, Figs. 1 and 2, the attenuating section 3; 3¹ comprises at least one first i.e. laminar attenuation element 31; 31 a on one narrow side 311 simultaneously longitudinal of the attenuation element E-E is arranged a set of permanent magnet fasteners 41; 411, 412 to implement a permanent magnet arrangement. By means of these permanent magnet fasteners, the attenuation element 31; 31¹ is fastened in its longitudinal direction E-E on the inner wall 11 of the housing section 30, most advantageously the pipe frame 10 of the air conditioning duct 1, and particularly in the flow direction of air A.

The shape of the first attenuation element 31; 31 a is advantageously a plate, most advantageously a straight and flat sheet which is fitted in the air conditioning duct 1 the large straight sheet surfaces i.e. wide sides 312 in the flow direction of air A. The sound attenuator 2 advantageously comprises a set of attenuation elements 31; 31 a by means of which the sound attenuator is divided into a set of elongated parallel attenuating ducts 32.

In an advantageous embodiment of the invention, a height b of the first attenuation element 31; 31 a of the attenuating section 3 and simultaneously a width of the wide side 312 perpendicularly against the longitudinal direction E-E of the attenuation element (and simultaneously against the longitudinal direction of the air conditioning duct 1 and the flow direction of air A) is at the most 70% of an inner diameter h of the housing section 10, 30. Then, fitting and installing the attenuation element 31; 31 a in place within the housing section 10, 30 is simple and easy. Furthermore, several attenuation elements 31; 31 a can be installed at the same point and parallel on different sides of the inner wall 11 of the housing section.

In an advantageous embodiment of the invention, a length L of the first attenuation element 31; 31 a of the attenuating section 3 in the longitudinal direction E-E of the attenuation element is at least five times the height b of the attenuation element. The long attenuation element 31 operates as a better sound attenuator than a short one. Additionally, the long attenuation element is most advantageously provided with several permanent magnet fasteners, whereby it stays very well in place and in a desired position fastened to the housing section 10, 30.

In an advantageous embodiment of the invention, the height b of the first attenuation element 31; 31 a of the attenuating section 3 is at least three times a thickness s of the attenuation element. The thickness s is a dimension being against the height b and the wide side 312 of the attenuation element 31; 31 a in the perpendicular direction. An advantage is that of such relatively thin laminar attenuation elements 31; 31 a, advantageously straight attenuator sheets, it is simple and easy to assemble sound attenuators having desired sound-attenuating properties within the housing section 30, particularly the pipe frame 10 of the air conditioning duct.

When the attenuating section 3; 3¹ includes several first i.e. laminar attenuation elements 31; 31 a, they are fitted on different sides of the inner wall 11 of the housing section 10, 30 at suitable angular distances separate from each other. The attenuation elements 31; 31 a are fitted in an exemplifying embodiment in parallel in the same cylindrical circumferential area of the housing section, whereby they form a star-shaped attenuating section 3; 3¹ extending outwards from the central axis of the housing section 30. Between the attenuation elements 31; 31 a are then left the attenuating ducts 32 along which the air flow of the air conditioning duct is able to flow with relatively low resistance and small pressure loss.

In an alternative exemplifying embodiment, the attenuation elements 31; 31 a are fitted at suitable angular distances on the cylindrical circumferential area of the housing section but such that they are at least partially successive (and thus partially parallel) in the longitudinal direction of the air conditioning duct and the flow direction of air A.

It should be noticed that the first attenuation elements 31; 31 a, such as straight attenuator sheets, can be different of their height b, length L and thickness even in the one and the same attenuating section 3; 3¹ of the sound attenuator 2.

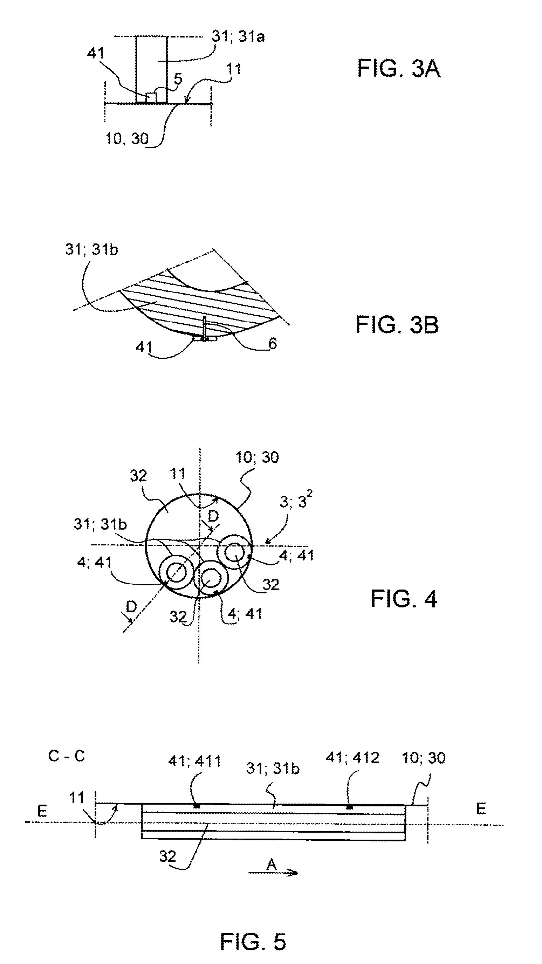

In an advantageous embodiment of the invention, Figs. 4 and 5, the attenuating section 3; 3² comprises at least one second i.e. cylindrical, such as tubular, attenuation element 31; 31 b in the housing of which on at least one straight line in the longitudinal direction E-E of the attenuation element is arranged the set of permanent magnet fasteners 41; 411, 412 to implement the permanent magnet arrangement 4. By means of these permanent magnet fasteners, the attenuation element 31; 31 b is fastened in its longitudinal direction E-E on the inner wall 11 of the housing section 30, most advantageously the pipe frame 10 of the air conditioning duct, in the flow direction of air A.

The cross section of the cylindrical, advantageously tubular, attenuation elements 31; 31 b is circular in the shown exemplifying embodiment, but it can also be a polygon, advantageously a regular polygon. The housing of the tubular attenuation element is advantageously relatively thick compared to the outer diameter of the attenuation element; the thickness of the housing and the diameter of the centre opening are e.g. equal, whereby the outer diameter is 3 times the thickness of the housing.

In the embodiment of Fig. 4, the attenuation elements 31; 31 b are of the shape of straight pipes having a relatively thick (in relation to the diameter) housing of sound-attenuating material. There are three tubular attenuation elements 31 b in the embodiment of Fig. 4 and they are arranged parallel against the inner wall 11 of the housing section 10, 30. The attenuation elements 31 b are connectable to each other in the installation stage e.g. with second permanent magnet fasteners which are equivalent to the above permanent magnet fasteners 41; 411, 412, whereby the attenuating section 3; 3² can be implemented as a tight unit. Even in this case, between the attenuation elements 31; 31b on both outside and inside (centre opening) is then left free space i.e. attenuating ducts 32 along which the air flow of the air conditioning duct is able to flow with relatively low resistance and small pressure loss.

In an alternative exemplifying embodiment, the second attenuation elements 31; 31 b are fitted at suitable angular distances on the cylindrical circumferential area of the housing section but such that they are at least partially successive (and thus partially parallel) in the longitudinal direction of the air conditioning duct and the flow direction of air A.

It should be noticed that the one and the same attenuating section 3 of the sound attenuator 2 is implementable with one or more both first and second attenuation elements 31; 31 a, 31 b.

The permanent magnet arrangement 4 of the attenuating section 3; 3¹, 3² is most advantageously implemented such that the attenuation element 31; 31 a, 31 b is provided with a permanent magnet fastener 41. Most advantageously, there are magnetic fasteners 41 at least two 411, 412, whereby the attenuation element 31; 31 a, 31 b can be easily and reliably fastened and locked in place in a desired position on the inner wall 11 of the housing section 10, 30. The permanent magnet fasteners 41; 411, 412 are arranged at a suitable distance from each other on that side or half of the attenuation element 31; 31 a, 31 b which is to be fitted against the inner wall 11 of the housing section 10, 30 and further most advantageously on a straight line in the longitudinal direction E-E of the attenuation element, as illustratively visible in Figs. 1, 2, 4 and 5.

The housing section 30 is in this case implemented of galvanised sheet metal or equivalent ferromagnetic material, the permanent magnet fasteners 41 keep the attenuation elements 31; 31 a, 31 b tightly fast on the inner wall 101 of the duct. It should again be stated that the air conditioning ducts 1 are mainly implemented of galvanised sheet metal, whereby the permanent magnet fasteners 41 also operate and keep the attenuation elements 31; 31 a, 31 b tightly fast on the inner wall 11 of the pipe frame 10 of the air conditioning duct operating as the housing section 30.

The permanent magnet fasteners 41; 411, 412 are relatively small pieces of magnet with the area e.g. of 10 x 20 mm and with an even outwards-directed surface. The permanent magnet fasteners 41; 411, 412 are arranged at a distance from each other on the outer surface of the attenuation element 31; 31 a, 31 b. They are fastened in a recess 5 (or on the outer surface) arranged in the attenuation element 31; 31 a e.g. by gluing with suitable glue (see Fig. 3A). Alternatively, the permanent magnet fasteners 41; 411, 412 are fastened in place on the outer surface (or recess) of the attenuation element 31; 31 a, 31 b with a suitable mechanical fastening element, e.g. a screw 6 (see Fig. 3B).

The permanent magnet fasteners 41; 411, 412 are implemented of suitable permanent-magnet ferromagnetic material. In this particular embodiment, the permanent magnet fasteners 13 are super magnets, whereby the materials of which they are most advantageously manufactured are neodymium-ferro-borium-based (NdFeB) alloys. By means of these materials, the permanent magnet fastener 41; 411, 412 achieves sufficient fastening force, long lifetime and high heat tolerance, up to 80°C.

When the sound attenuator 2 for the air conditioning duct is fitted to the air conditioning duct 1 and the housing section 30 is implemented of a part of the air conditioning duct, particularly its pipe frame 10, the installation of the attenuating section 3, 3¹, 3² is most advantageously implemented via an opening provided with a hatch, arranged to the air conditioning duct, particularly its frame section. The hatch is e.g. an inspection cover of the air conditioning duct. By means of the hatch, the opening can be opened and closed air-tightly. The shape of the opening is e.g. a rectangle (or alternatively some other suitable geometric shape, such as an ellipse) the length of which equals at least nearly the diameter of the air conditioning duct and the width of which is within the same range. Via this hatch, one or more attenuation elements 31 of the attenuating section 3 of the sound attenuator 2 is fittable within the air conditioning duct and fastenable with the permanent magnet fasteners 41 at a suitable point on the inner wall 11 of the frame section 10. In an equivalent way vice versa, one or more attenuation elements 31 can be detached and taken out of the air conditioning duct 1.

The attenuation element 31 a, 31 b of the attenuating section 3; 3¹, 3² of the sound attenuator 2 is of suitable elastic and sound-attenuating material, such as foam plastic material, mineral wool or equivalent.

The fixed cross-sectional area of the attenuating section 3 of the sound attenuator 2 is at its maximum about 20% of the cross-sectional area of the air conditioning duct 1. The cross-sectional area of the parallel attenuating ducts 32 of the attenuating section 31 of the sound attenuator 2 is then about 80% of the cross-sectional area of the air conditioning duct 1.

## Claims

1. An attenuating section for a sound attenuator (2) in an air conditioning duct, which attenuating section (3) is implemented of elastic and sound-attenuating material, **characterised in that** the attenuating section (3; 3¹, 3²) comprises at least one attenuation element (31; 31 a; 31 b) which is provided with a permanent magnet arrangement (4; 41) by means of which the attenuating section is to be detachably fastened to a housing section (10, 30) of the sound attenuator.

2. An attenuating section according to claim 1, **characterised in that** the attenuating section (3; 3¹) comprises at least one laminar attenuation element (31; 31 a) on one narrow side (311) of which is arranged a set of permanent magnet fasteners (41; 411, 412) to implement the permanent magnet arrangement.

3. An attenuating section according to claim 2, **characterised in that** a height (b) of the attenuation element (31; 31 a) and simultaneously a width of a wide side (312) perpendicularly against the longitudinal direction (E-E) of the attenuation element is at the most 70% of an inner diameter (h) of the housing section (10, 30).

4. An attenuating section according to claim 2 or 3, **characterised in that** a length (L) of the attenuation element (31; 31 a) in the longitudinal direction (E-E) of the attenuation element is at least five times the height (b) of the attenuation element.

5. An attenuating section according to claim 3 or 4, **characterised in that** the height (b) of the attenuation element (31; 31a) is at least three times a thickness (s) of the attenuation element.

6. An attenuating section according to claim 1, **characterised in that** the attenuating section (3; 3²) comprises at least one cylindrical, advantageously tubular, attenuation element (31; 31 b) in the housing of which on at least one straight line in the longitudinal direction (E-E) of the attenuation element is arranged a set of permanent magnet fasteners (41; 411; 412) to implement a permanent magnet arrangement.

7. An attenuating section according to any one of preceding claims, **characterised in that** the permanent magnet fasteners (41; 411, 412) are glued to the attenuation element (31; 31 a).

8. An attenuating section according to any one of preceding claims 1-6, **characterised in that** the permanent magnet fasteners (41; 411, 412) are fastened with a mechanical fastening means, such as a screw (6), to the attenuation element (31; 31a).

9. A sound attenuator for an air conditioning duct, which is to be fitted in the air conditioning duct (1) to attenuate duct sounds which sound attenuator (2) comprises a housing section (30) which is implemented of a part of the air conditioning duct, particularly its pipe frame (10); and an attenuating section (3) which is of elastic and sound-attenuating material and fitted within the housing section (10, 30), **characterised in that** the attenuating section (3; 3¹, 3²) is implemented according to any one of preceding claims 1-8 and fastened to the housing section (30, 10) and simultaneously to an inner wall (11) of the air conditioning duct with a permanent magnet arrangement (4), particularly with permanent magnet fasteners (41; 411, 412).

## Patentansprüche

1. Dämpfungsabschnitt für einen Schalldämpfer (2) in einer Durchführung einer Klimaanlage, wobei der Dämpfungsabschnitt (3) aus einem elastischen und schalldämpfenden Material realisiert ist, **dadurch gekennzeichnet, dass** der Dämpfungsabschnitt (3; 3¹, 3²) wenigstens ein Dämpfungselement (31; 31a; 31 b) umfasst, das mit einer Permanentmagnetanordnung (4; 41) versehen ist, mittels welcher der Dämpfungsabschnitt lösbar an einem Gehäuseabschnitt (10, 30) des Schalldämpfers zu befestigen ist.

2. Dämpfungsabschnitt nach Anspruch 1, **dadurch gekennzeichnet, dass** der Dämpfungsabschnitt (3; 3¹) wenigstens ein laminares Dämpfungselement (31; 31 a) an einer schmalen Seite (311) umfasst, an welchem ein Satz von Permanentmagnetbefestigungsmitteln (41; 411, 412) angeordnet ist, um die Permanentmagnetanordnung zu realisieren.

3. Dämpfungsabschnitt nach Anspruch 2, **dadurch gekennzeichnet, dass** eine Höhe (b) des Dämpfungselements (31; 31 a) und gleichzeitig eine Breite einer Breitenseite (312), die rechtwinklig zu der Längsrichtung (E-E) des Dämpfungselements ist, maximal 70% eines inneren Durchmessers (h) des Gehäuseabschnitts (10, 30) beträgt.

4. Dämpfungsabschnitt nach Anspruch 2 oder 3, **dadurch gekennzeichnet, dass** eine Länge (L) des Dämpfungselements (31; 31 a) in der Längsrichtung (E-E) des Dämpfungselements wenigstens ein fünffaches der Höhe (b) des Dämpfungselements beträgt.

5. Dämpfungsabschnitt nach Anspruch 3 oder 4, **dadurch gekennzeichnet dass** die Höhe (b) des Dämpfungselements (31; 31 a) wenigstens ein dreifaches einer Dicke (s) des Dämpfungselements beträgt.

6. Dämpfungsabschnitt nach Anspruch 1, **dadurch gekennzeichnet, dass** der Dämpfungsabschnitt (3; 3²) wenigstens ein zylindrisches, vorzugsweise röhrenförmiges Dämpfungselement (31; 31 b) umfasst, in dessen Gehäuse in wenigstens einer geraden Linie in der Längsrichtung (E-E) des Dämpfungselements ein Satz von Permanentmagnetbefestigungsmitteln (41; 411; 412) angeordnet ist, um eine Permanentmagnetanordnung zu realisieren.

7. Dämpfungsabschnitt nach einem der vorhergehenden Ansprüche, **dadurch gekennzeichnet, dass** die Permanentmagnetbefestigungsmittel (41; 411, 412) an das Dämpfungselement (31; 31 a) geklebt sind.

8. Dämpfungsabschnitt nach einem der vorhergehenden Ansprüche 1-6, **dadurch gekennzeichnet, dass** die Permanentmagnetbefestigungsmittel (41; 411, 412) mit einem mechanischen Befestigungsmittel, beispielsweise einer Schraube (6), an dem Dämpfungselement (31; 31 a) befestigt sind.

9. Schalldämpfer für eine Durchführung einer Klimaanlage, der in der Durchführung einer Klimaanlage (1) einzupassen ist, um Durchführungsgeräusche zu dämpfen, wobei der Schalldämpfer (2) einen Gehäuseabschnitt (30) umfasst, der als ein Teil der Durchführung einer Klimaanlage, insbesondere ihres Durchführungsrahmens (10), realisiert ist; und ein Dämpfungsabschnitt (3), der aus einem elastischen und schalldämpfenden Material ist und innerhalb des Gehäuseabschnitts (10, 30) eingepasst ist, **dadurch gekennzeichnet, dass** der Dämpfungsabschnitt (3; 3', 3²) nach einem der vorhergehenden Ansprüche 1-8 realisiert ist und an dem Gehäuseabschnitt (30, 10) und gleichzeitig an einer inneren Wand (11) der Durchführung einer Klimaanlage mit einer Permanentmagnetanordnung (4), insbesondere mit Permanentmagnetbefestigungsmitteln (41; 411, 412), befestigt ist.

## Revendications

1. Section d'atténuation pour un atténuateur acoustique (2) dans un conduit de climatiseur, laquelle section d'atténuation (3) est mise en oeuvre avec un matériau élastique et d'atténuation acoustique, **caractérisée en ce que** la section d'atténuation (3 ; 3¹, 3²) comprend au moins un élément d'atténuation (31 ; 31a ; 31b) qui est prévu avec un agencement d'aimant permanent (4 ; 41) au moyen duquel la section d'atténuation doit être fixée de manière détachable à une section de boîtier (10, 30) de l'atténuateur acoustique.

2. Section d'atténuation selon la revendication 1, **caractérisée en ce que** la section d'atténuation (3 ; 3¹) comprend au moins un élément d'atténuation laminaire (31 ; 31a) sur un côté étroit (311) duquel est agencé un ensemble de fixations d'aimant permanent (41 ; 411, 412) pour mettre en oeuvre l'agencement d'aimant permanent.

3. Section d'atténuation selon la revendication 2, **caractérisée en ce qu'**une hauteur (b) de l'élément d'atténuation (31 ; 31a) et simultanément une largeur d'un côté large (312) perpendiculairement contre la direction longitudinale (E-E) de l'élément d'atténuation représente au maximum 70 % d'un diamètre interne (h) de la section de boîtier (10, 30).

4. Section d'atténuation selon la revendication 2 ou 3, **caractérisée en ce qu'**une longueur (L) de l'élément d'atténuation (31 ; 31a) dans la direction longitudinale (E-E) de l'élément d'atténuation représente au moins cinq fois la hauteur (b) de l'élément d'atténuation.

5. Section d'atténuation selon la revendication 3 ou 4, **caractérisée en ce que** la hauteur (b) de l'élément d'atténuation (31 ; 31a) représente au moins trois fois une épaisseur (s) de l'élément d'atténuation.

6. Section d'atténuation selon la revendication 1, **caractérisée en ce que** la section d'atténuation (3 ; 3²) comprend au moins un élément d'atténuation (31 ; 31b) cylindrique, avantageusement tubulaire dans le boîtier duquel, sur au moins une ligne droite dans la direction longitudinale (E-E) de l'élément d'atténuation, est agencé un ensemble de fixations d'aimant permanent (41 ; 411 ; 412) pour mettre en oeuvre un agencement d'aimant permanent.

7. Section d'atténuation selon l'une quelconque des revendications précédentes, **caractérisée en ce que** les fixations d'aimant permanent (41 ; 411, 412) sont collées sur l'élément d'atténuation (31 ; 31a).

8. Section d'atténuation selon l'une quelconque des revendications 1 à 6, **caractérisée en ce que** les fixations d'aimant permanent (41 ; 411, 412) sont fixées avec des moyens de fixation mécanique, tels qu'une vis (6), à l'élément d'atténuation (31 ; 31a).

9. Atténuateur sonore pour un conduit de climatiseur, qui doit être monté dans le conduit de climatiseur (1) afin d'atténuer les sons de conduit, lequel atténuateur acoustique (2) comprend une section de boîtier (30) qui est mise en oeuvre avec une partie du conduit de climatiseur, en particulier son bâti de tuyau (10) ; et une section d'atténuation (3) qui est réalisée avec un matériau élastique et d'atténuation acoustique et montée à l'intérieur de la section de boîtier (10, 30), **caractérisé en ce que** la section d'atténuation (3 ; 3¹, 3²) est mise en oeuvre selon l'une quelconque des revendications 1 à 8 et fixée sur la section de boîtier (30, 10) et simultanément sur une paroi interne (11) du conduit de climatiseur avec un agencement d'aimant permanent (4), en particulier avec des fixations d'aimant permanent (41 ; 411, 412).
